# EUROPÄISCHE PATENTSCHRIFT

(11) **EP 0 548 703 B1**
(45) Veröffentlichungstag und Bekanntmachung des Hinweises auf die Patenterteilung: **03.04.1996**
(21) Anmeldenummer: 92121115.7
(22) Anmeldetag: 11.12.1992
(51) Int. Cl.: B29D 30/06, B29C 33/30, B29C 43/36, B29C 43/38

(54) **Verfahren und Vorrichtung zur Herstellung eines Fahrzeugluftreifens**
Method and apparatus for making tyres
Procédé et dispositif pour la fabrication des pneumatiques

(30) Priorität: 21.12.1991 DE 4142718
(43) Veröffentlichungstag der Anmeldung: 30.06.1993
(73) Patentinhaber: Continental Aktiengesellschaft, D-30165 Hannover (DE)
(72) Erfinder: Lange, Bernd, W-3000 Hannover 1 (DE); Ramcke, Uwe, W-3030 Walsrode (DE)

(56) Entgegenhaltungen:
- EP-A- 0 405 276
- EP-A- 0 440 040
- EP-A- 0 451 832

## Beschreibung

Die Erfindung bezieht sich auf ein Verfahren zur Herstellung eines Fahrzeugluftreifens nach dem Oberbegriff des Anspruches 1 und drei Vorrichtungen zur Durchführung dieses Verfahrens.

Die Erfindung geht aus von dem in der EP-PA 0 405 276 und der DE-A-40 09 500 beschriebenen Stand der Technik zur Behandlung des Problemes, daß beim Schließen der radial beweglichen, den Laufflächenbereich abformenden Segmente, nachfolgend Radialsegmente genannt, radial geteilter Vulkanisierformen Teile des noch fließfähigen Kautschuks zu den etwa axial verlaufenden Grenzen der Segmente hingedrückt wird. An solchen Stellen ist der Laufstreifen verdickt, was zu Radialkrafterhöhungen an diesen Stellen beim Durchlauf des Latsches führt. Hiervon wird eine Schwingung des Gürtelpaketes gegenüber den Wulstkernen und eine Schwingung der gesamten Radaufhängung angeregt.

Zu seiner Lösung schlagen beide Schriften ein vergrößertes Positiv-Volumen an den Segmentgrenzen vor, um den Überschüß von Kautschuk in für den Rundlauf unschädlicher Weise im Reifen unterzubringen, wobei die ältere, gegenüber der jüngeren nicht vorveröffentlichte Schrift die Erstreckung des Zusatzvolumens zu beiden Seiten einer jeweiligen Segmentgrenze lehrt, während die jüngere nur die Anordnung des Zusatzvolumens im Bereich der Segmentgrenzen fordert. DE-A-40 09 500 offenbart die Merkmale des Oberbegriffs des Anspruchs 1.

Die nach diesen Ständen der Technik gefertigten Reifen zeigen zwar bei quasi-statischer Messung der Radialkraftschwankung ein vorbildliches Verhalten, jedoch verschlechtert sich dieses bei zunehmender Geschwindigkeit. Dieser Nachteil ist an nichtangetriebenen Achsen deutlicher als an angetriebenen Achsen.

Er ist an Reifen mit harter Gummimischung größer als an solchen mit weicher Gummimischung. Das Problem ist am größten an nicht-angetriebenen Vorderachsen von Nutzfahrzeugen, insbesondere LKW.

Die Zunahme der Radialkraftschwankung über der Geschwindigkeit ist bislang im Stand der Technik offenbar wegen des generell über der Geschwindigkeit ansteigenden Körperschall- und Geräuschpegels gar nicht wahrgenommen worden. Demgegenüber geht die nachfolgend erläuterte Erfindung von der Aufgabe aus, die Radialkraftschwankung auch bei hohen Geschwindikeiten zu senken.

Die Aufgabe wird erfindungsgemäß durch ein Herstellungsverfahren gelöst, welches neben den Merkmalen des Oberbegriffs des Anspruchs 1 dadurch gekennzeichnet ist, daß die überschüssige Kautschukmenge während des Schließens der Form und/oder während der Resterhebung nach radial außen durch Öffnungen oder Löcher der Form ausgetrieben wird, der Fahrzeugluftreifen dann zusammen mit den noch im Bereich der Segmentgrenzen an ihm haftenden Austriebe vulkanisiert wird und die Austriebe nach Vollendung der Vulkanisation entfernt werden, sodaß das Endprodukt frei von Austrieben ist.

Alternative bevorzugte Ausbildungen sind dadurch gekennzeichnet,
daß die Radialsegmente 2 in der weitest möglich geschlossenen Stellung sich an ihrer radial inneren Peripherie zumindest nicht über der gesamten axialen Breite berühren, sodaß Öffnungen an der radial inneren Peripherie verbleiben, welche die Segmentgrenzen durchdringen, daß nach Aufbau des inneren Formüberdruckes Kautschuk durch diese Öffnungen 8 im wesentlichen nach radial außen ausgetrieben wird und, daß der Austrieb nach Vollendung der Vulkanisation entfernt wird, oder, sofern die Radialsegmente zumindest in den die erhabenen Bereiche der Lauffläche abformenden Bereichen Löcher aufweisen, in denen sich Austrieb bildet, der nach Vollendung der Vulkanisation vom Reifen entfernt wird, wobei diese Löcher eine Querschnittfläche zwischen 0,7 und 3,5 mm² aufweisen, dadurch,
daß die Radialsegmente 2 zumindest in den die erhabenen Bereiche der Lauffläche abformenden Bereichen 14 Löcher 15 aufweisen, in denen sich Austrieb 17 bildet, wobei die Löcher 15.1 in Segmentmitte eine Querschnittfläche zwischen 0,7 und 3,5 mm und in den Segmentgrenzbereichen 11, von denen ein Jeder sich über eine Bogenlänge von mindestens 10 % der jeweiligen Radialsegment-Bogenlänge s erstreckt, eine mindestens 1,5mal so große Querschnittfläche haben,
oder - unter gleicher Voraussetzung wie im Absatz zuvor - dadurch,
daß die Radialsegmente nur in jedem Grenzbereich, von denen ein jeder eine Bogenlänge von mindestens 10 % und höchstens 20 % der jeweiligen Radialsegment-Bogenlänge (s) beträgt, durch Löcher entlüftet werden, deren Querschnittflächen (A) zwischen 1,4 und 8 mm² liegt.

Allen drei Lösungsvarianten ist gemein, daß der überschüssige Kautschuk nicht innerhalb des Endproduktes verbleibt, wie in den beiden genannten Ständen der Technik, sondern im wesentlichen nach radial außen ausgetrieben wird und von dort nach Vollendung der Vulkanisation entfernt wird. Gegenüber dieser gemeinsamen übergeordneten Idee sind die Unterschiede der drei Varianten von kleinerem Rang.

Der Erfindung in all ihren drei Varianten lag die neue Hypothese zugrunde, daß die in den zitierten Ständen der Technik gelehrten Gummikonzentrationen an den Stellen, wo während der Vulkanisation Segmentgrenzen lagen, dazu führen, daß an diesen Umfangsstellen größere Fliehkräfte bei schneller Fahrt angreifen als an den übrigen Umfangsstellen, wodurch der Reifen in über der Geschwindigkeit quadratisch zunehmenden Weise zu einem Unrund verformt wird, mit Radiusmaxima an den ehemaligen Segmentgrenzen und Radiausminima an den ehemaligen Segmentmitten. Diese Hypothese besagte also kurzum, daß durch bei hoher Geschwindigkeit sich einstellende Ungleichmäßigkeit der Fliehkraft über dem Umfang wieder genau an den Stellen, wo in der quasistatischen Messung gerade der weitgehende Ausgleich der Radialkraftschwankungen gelang, eine andere Fehlerursache geschaffen wurde.

Mit den vorhandenen Prüfständen konnte diese Hypothese nicht überprüft werden, da sie nicht die Messung der Radialkraftschwankungen bei hohen Raddrehzahlen zuließen. Hierzu waren die Sensoren zu träge. - Inzwischen konnte die genannte Hypothese durch Versuche bestätigt werden.

Unter "Loch" wird im Rahmen dieser Anmeldung eine Öffnung verstanden, die eine geschlossene Peripherie aufweist. Die Peripherie braucht nicht, wie das im noch spezielleren Fall einer Bohrung der Fall wäre, kreisrund zu sein. Vielmehr hat die Verwendung von in der Draufsicht rechteckförmigen Löchern den Vorteil, daß man mit weniger Löchern auskommt und so der Austrieb mit weniger Schnitten, also leichter, zu entfernen ist.

Vorzugsweise beschränken sich alle Löcher (sowohl in den Verfahren nach Anspruch 3 als auch nach 5) und Öffnungen (in Verfahren nach Anspruch 1) auf die axialen Bereiche, wo erhabene Profilbereiche des zu fertigenden Reifens abgeformt werden. Auf diese Weise ist der Austrieb nach Vollendung der Vulkanisation besonders leicht zu entfernen, beispielsweise durch ein entlang der Reifenperipherie geführtes Trennmittel wie ein Messer oder dergleichen. Eine Entfernung von Austrieb aus dem Nutengrund erfordert demgegenüber ein komplizierteres Werkzeug und eine kompliziertere Werkzeugführung. Durch die Beschränkung des Austriebes auf die erhabenen Profilbereiche wird der Effekt der gleichmäßigeren Massenkonzentration über dem Umfang nicht geschmälert.

In der Verfahrensvariante (Anspruch 4), wo über den gesamten Umfang verteilt sich Löcher befinden, die in Segmentmitte nur der Form-Entlüftung dienen, an den Segmentgrenzen hingegen so erweitert sind, daß hierein auch die zum Massenausgleich erforderlichen Kautschukmengen fließen können, erfolgt die Querschnittflächen-Zunahme zu den Segmentgrenzen hin vorzugsweise nicht abrupt sondern zumindest quasi stetig, vorzugsweise gemäß einer Parabel.

Das Wort "quasi" in obiger Formulierung bzw. "verstetigt" im zugehörigen Anspruch 4 nimmt Rücksicht auf die Ausführungsformen, wo die Gesamtquerschnittsfläche der Austriebslöcher im Bereich einer Segmentgrenze nicht auf ein einziges sondern mehrere diskrete Löcher verteilt ist. Ähnlich einem "stetigen" Schwarz-Weiß-Übergang mit Grau-Tönen in einem Rasterbild, wo der Übergang von Bildpunkt zu Bildpunkt prizipiell unstetig ist, der Ton-Übergang also nur quasi-stetig ist, das heißt nur bei Ignorierung des Details der Diskretheit der Bildpunkte bzw. der Löcher stetig erscheint, sind die gewählten Begriffe auch hier zu verstehen.

Ist hingegen pro erhabener Profilumfangsrippe nur eine einzige Öffnung oder nur ein einziges Loch vorgesehen, so sollte dieses Loch und/oder Öffnung seine Breite stetig zur Segmentgrenze hin vergrößern. Angewandt auf eine Öffnung nach Anspruch 1 ergibt sich eine trichterähnliche Mündung zur Segmentgrenze hin.

Vorteilhafte Kombinationen der Lösungsgedanken des Anspruches 2 mit solchen des Anspruches 4 sind den Ansprüchen 7 und 8 zu entnehmen. Die Differenzierung der Lochquerschnitte (gemäß Anspruch 7 nur 1,5-mal so groß, hingegen gemäß Anspruch 8 doppelt, also 2,0-mal so groß) braucht nicht so stark zu sein, wenn außerdem die Segmentgrenzen durchsetzende Öffnungen vorgesehen sind.

Aufgrund der Kautschukfließbewegung scheint es möglich zu sein, auf Entlüftungsbohrungen in Segmentmitte ganz zu verzichten, während die Radialsegmente zumindest in den die erhabenen Bereiche der Lauffläche abformenden, in Segmentgrenzennähe gelegenen Bereichen Löcher aufweisen, in denen sich Austrieb bildet, wobei die Lochquerschnittfläche jeweils zwischen 1 und 6 mm² liegt.

Ein Problem bei der Erprobung der Erfindung war, genau die Bedingungen zu treffen, daß die richtige Menge Kautschuk ausgetrieben wird. Wird zu wenig ausgetrieben, so bleibt ein Rest des bekämpften Übels übrig, nämlich eine Radialkrafterhöhung an den Reifenstellen, die bei einer Radialsegmentgrenze lagen; wird zu viel ausgetrieben, so ergibt sich als Überkompensation ein Radialkraftminimum an den Reifenstellen, die bei einer Segmentgrenze lagen.

Die Austriebmenge wird durch viele verschiedene Faktoren beeinflußt; eine Versteilerung des Temperaturanstieges zu Beginn der Vulkanisation führt zu einer temporär erhöhten Fließwilligkeit des Kautschukes und damit zu größerem Austrieb. Im gleichen Sinne wirkt eine Minderdosierung von Beschleuniger oder verminderte Aktivität des verwendeten Rußes (kleinere Oberfläche). - Zur Minderung der Toleranz-Empfindlichkeit wird in Anspruch 9 eine Weiterentwicklung der erfindungsgemäßen Verfahren angegeben.

Dadurch, daß sich in Kautschfließrichtung gesehen hinter den Öffnungen bzw. Löchern zunächst eine Erweiterung und anschließend eine Verengung befindet, deren Querschnittfläche (Aₑ) höchstens halb so groß ist wie die Querschnittfläche (A) der davor befindlichen Öffnung bzw. des Loches, ist der Strömungswiderstand bis zur Auffüllung der kavernenartigen Erweiterung mit Kautschuk gering, jedoch nach Auffüllung für weiter nach außen drängenden Kautschuk hoch, durch den Übergang auf die deutlich kleinere Querschnittfläche. Da durch den engen Querschnitt nur die fließwillige Luft entweicht aber nahezu kein weiterer Kautschuk, determiniert das Volumen der kavernenartigen Erweiterung das Volumen des austreibbaren Kautschukes im wesentlichen unabhängig von den Toleranzen in der Temperaturführung und Mischungszusammensetzung.

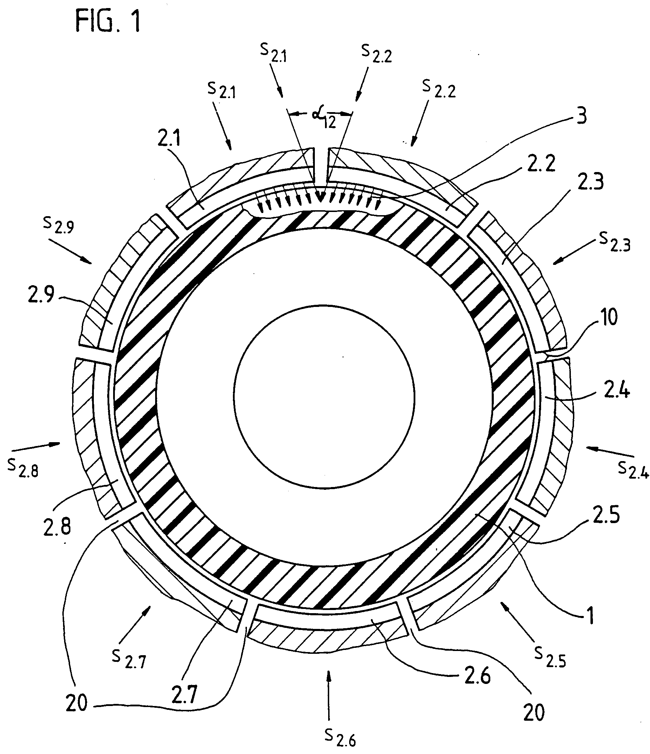

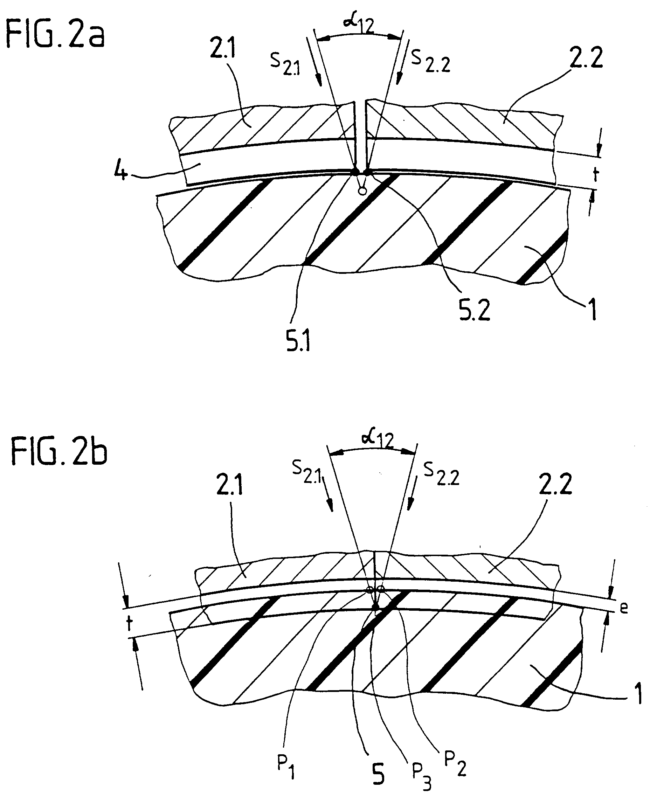

Das Volumen der Kaverne plus dem des radial innen davon angeordneten Kautschukkanals wird so groß bemessen wie das Volumen des zu verdrängenden Kautschukes; zur Kalkulation des zu verdrängenden Kautschukvolumens wird auf die Beschreibung zu den Figuren 1 und 2 verwiesen.

Das beschriebene Herstellungsverfahren erfordert neuartige Vulkanisationsformen mit Öffnungen an den Segmentgrenzen oder zumindest im Grenzbereich der Radialsegmente, durch die Kautschuk im wesentlichen in radialer Richtung aus der Form entweichen kann. Diese speziell für das erfindungsgemäße Verfahren erforderlichen Vulkanisationsformen sind Gegenstand der Ansprüche 13 bis 18. Weil bei allen bekannten Vulkanisierverfahren darauf zu achten ist, den Austrieb so klein wie möglich zu halten, sind diese Formen nur für ein erfindungsgemäßes Verfahren gut zu gebrauchen.

Erfindungsgemäß lehrt Anspruch 13 eine radial geteilte Vulkanisierform, die geeignet ist zur Durchführung eines Verfahrens gemäß Anspruch 2. In der weitest möglich geschlossenen Stellung sollen sich bei ihr benachbarte Radialsegmente an den Stellen, wo sie Nuten des zu fertigenden Reifens abformen, einander berühren, hingegen an jeweils mindestens einer Stelle pro Segmentgrenze, wo sie erhabene Laufflächenbereiche des zuu fertigenden Reifens abformen, nicht berühren und hierdurch eine Öffnung ausbilden. Anspruch 14 beschreibt eine bevorzugte Ausführung.

Erfindungsgemäß lehrt Anspruch 15 eine radial geteilte Vulkanisierform, die geeignet ist zur Durchführung eines Verfahrens gemäß Anspruch 4. Deren Radialsegmente sollen zumindest in den die erhabenen Bereiche der Lauffläche abformenden Bereichen Löcher aufweisen und zwar zumindest in jedem Grenzbereich, von denen ein jeder eine Bogenlänge von mindestens 10 % der jeweiligen Radialsegment-Bogenlänge (s) beträgt, solche Löcher deren Querschnittfläche (A) mindestens doppelt, vorzugsweise mehr als 5-mal so groß ist wie die Querschnittfläche der Löcher in der Mitte - bezüglich der Umfangserstreckung - der Radialsegmente, wobei die Querschnittsfläche der Löcher in der Mitte - ebenfalls bezüglich der Umfangserstreckung - der Radialsegmente 0,7 bis 3,5 mm² beträgt.

Erfindungsgemäß lehrt Anspruch 16 eine radial geteilte Vulkanisierform, die geeignet ist zur Durchführung eines Verfahrens gemäß Anspruch 6. Deren Radialsegmente sollen zumindest in den die erhabenen Laufflächenbereiche abformenden Bereichen Löcher aufweisen, wobei die Radialsegmente nur in jedem Grenzbereich, von denen Jeder eine Bogenlänge von mindestens 10 % und höchstens 20 % der jeweiligen Radialsegment-Bogenlänge (s) beträgt, Löcher aufweisen. Deren Querschnittflächen sollen zwischen 1,4 und 8 mm² liegen.

Die Ansprüche 17 und 18 nennen bevorzugte Ausführungsformen oben genannter Vulkanisierformen.

Die Erfindung wird nachfolgend anhand einiger Figuren näher erläutert.

Die Figuren 1 und 2 dienen der Erläuterung des der Erfindung zugrunde liegenden Problems. Die Figur 1 zeigt in einem Schnitt durch den Zenit eines zu vulkanisierenden Reifenrohlinges 1 , der in eine geöffnete Vulkanisationspresse eingebracht ist, welche sich gerade schließt, neun auf einen Reifenrohling 1 sich hinbewegende Radialsegmente, die allgemein mit dem Bezugszeichen 2 bezeichnet sind. Dort, wo eine Unterscheidung der neun Radialsegmente untereinander hilfreich ist, ist hinter einem Punkt eine weitere Ziffer von 1 bis 9 angeordnet.

Während bei der Herstellung von Reifen mit kleinen Profiltiefen und großen möglichen Resterhebungen sich zunächst die Form vollständig schließt, bevor die Radialsegmente auf den Rohling eindrücken, die Profileinprägung also erst beim Resterheben des Rohlings beginnt, beginnen beim dargestellten Nutzfahrzeugreifen wie bei größeren PKW-Reifen unvermeidlicherweise die Radialsegmente mit dem Eindrücken des Profiles bereits, bevor sie sich zu einem geschlossenen Umfang geschlossen haben.

Die Radialsegmente 2 sind so geführt, daß sich die jeweilige Segmentmitte auf einer exakt radial ausgerichteten Bahn bewegt. Dieser Sachverhalt ist durch Bewegungspfeile dargestellt, wobei das verwendete Bezugszeichen "s" auf den Bewegungsweg hindeuten soll. An die Bezeichnung der Bewegungspfeile ist als Index die Bezeichnung des jeweiligen individuellen Segmentes angeschlossen.

Sämtliche Punkte eines jeden Radialsegmentes 2 bewegen sich beim Schließen der Form aufgrund der Quasi-Starrheit der Segmente 2 auf zueinander parallelen Bahnen um die gleiche Strecke. Dies ist mit einer Vielzahl kleiner Pfeile 3 in der rechten Hälfte des Radialsegmentes 2.1 und in der linken Hälfte des Radialsegmentes 2.2 wiedergegeben. Die Beschränkung der Darstellung der Bewegungsrichtungspfeile 3 auf die bezeichneten Segmenthälften soll lediglich die graphische Überfrachtung der Figur vermeiden; der mit dieser Vielzahl von Pfeilen 3 angedeutete Sachverhalt gilt selbstverständlich für alle Segmente 2.

Jede örtliche Bewegungsrichtung 3 läßt sich in eine Radialkomponente und eine Umfangskomponente aufteilen. Während die Radialkomponente nahezu unabhängig von der Entfernung des betrachteten Ortes von der Segmentmitte ist, steigt die von der Segmentmitte wegweisende Umfangskomponente in guter Näherung quadratisch über der Entfernung des betrachteten Segmentortes von der jeweiligen Segmentmitte. Hierdurch wird insbesondere im Bereich der Segmentgrenzen 10 eine Fließbewegung des noch unvulkanisierten Kautschukes zu den Segmentgrenzen 10 hin hervorgerufen, sobald die Radialsegmente 2 mit ihren die Reifennuten abformenden Stegen auf den Rohling 1 drücken.

Der Abstand zwischen den verschiedenen Formsegmenten 2 ist in Figur 1 zur Verdeutlichung übertrieben dargestellt; tatsächlich ist der Spalt 20 zwischen den Segmenten 2 nach dem Stand der Technik zu Beginn der Profileinprägung bereits so schmal, daß durch ihn nahezu kein Kautschuk mehr entweichen kann; vielmehr verbleibt der wesentliche Teil des auf die Segmentgrenzen 10 zugespülten Kautschukes im Reifen selbst.

Die Menge des an den Segmentgrenzen 10 überschüssigen Kautschukes hängt, wie die Figur 1 anschaulich zeigt, neben dem Zeitpunkt des Beginns der Profilprägung über dem Verfahrweg der Segmente 2 sowie der absoluten Reifengröße wesentlich von dem Winkel α zwischen den Bewegungsrichtungen s der aneinandergrenzenden Segmente ab. Diese Winkel werden nachfolgend als Schließwinkel α bezeichnet. Beispielhaft ist der Schließwinkel α₁₂ zwischen dem Radialsegment 2.1 und 2.2 dargestellt.

Die Figur 2a zeigt im vergrößerten Ausschnitt den Grenzbereich zwischen den Radialsegmenten 2.1 und 2.2 in einer Stellung unmittelbar bevor die Segmente 2 den Rohling 1 zu prägen beginnen. Bei weiterem Schließen beginnen die Stege 4 , deren Höhe t die Profiltiefe der späteren Reifennuten determiniert, in den Rohling 1 einzudringen. Als s_{2.1} und s_{2.2} sind die Bewegungsrichtungen der jeweiligen Segmentkanten 5.1 bzw. 5.2 angegeben.

In der Figur 2b ist der gleiche Bildausschnitt, jedoch in vollständig geschlossener Stellung dargestellt. Die benachbarten, radial innen liegenden Segmentkanten 5 liegen nun beieinander. Mit einem Kringel sind die Ausgangslagen der Kanten 5 , wie sie sich aus Figur 2a ergeben, in diese Figur übernommen, so wie in Fig. 2a die zu erreichende Endlage als Kringel dargestellt ist. Das zwischen diesen drei Positionspunkten aufgespannte Dreieck ergibt nach Integration über die Axialerstreckung der innerhalb diese Dreiecks eingetauchten Stege 4 das überschüssige Kautschukvolumen. Nach dem Schließen der Form wird die Resterhebung aufgebracht, nach der die vollständige Profiltiefe t erreicht wird. Es ist ein für LKW-Reifen übliches Verhältnis V zwischen Resterhebung e und Profiltiefe t mit etwa 0,4 dargestellt.

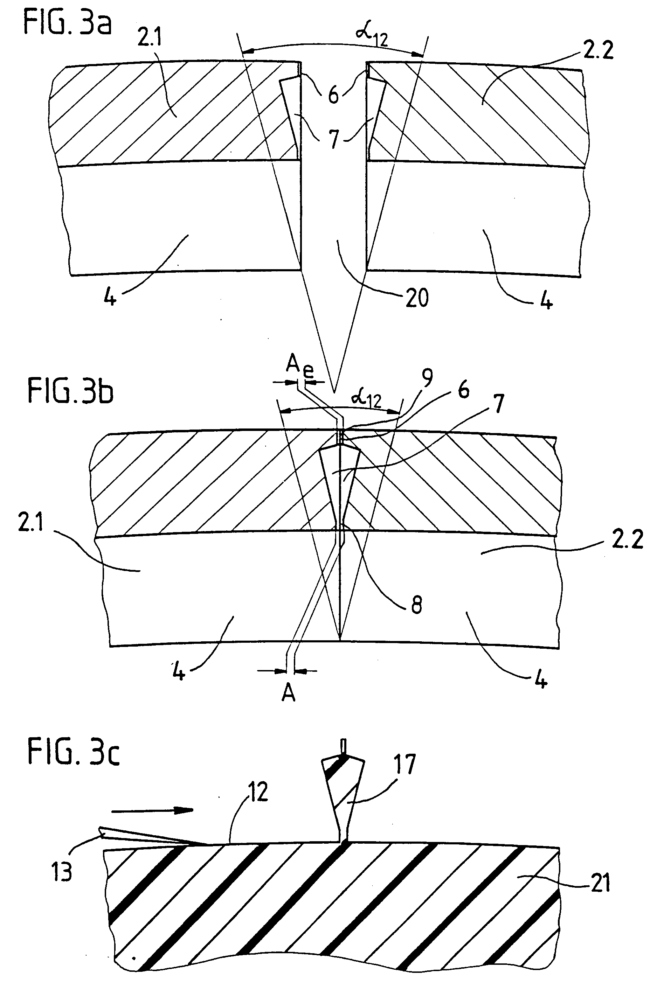

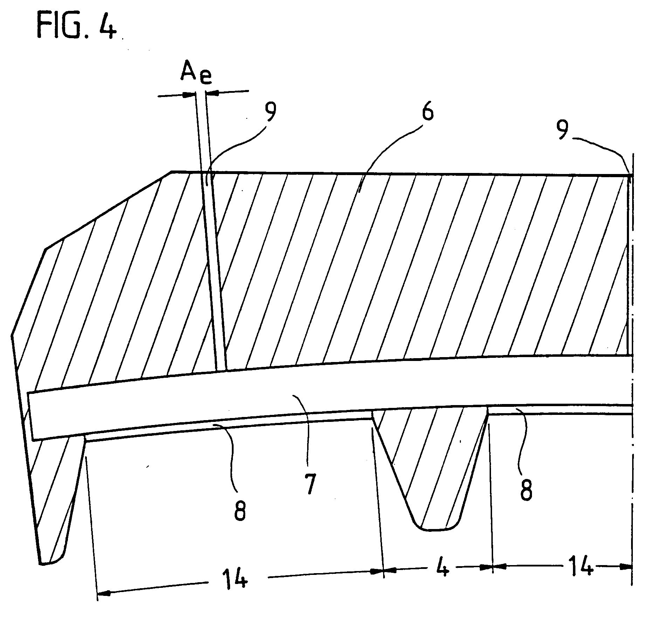

Die nachfolgenden Figuren zeigen die wichtigsten Varianten der Erfindung. Wie schon in den vorangehenden sind in den Figuren 3 und 4 alle Stege 4 , die die Reifennuten abformen, außerhalb des Zenites angeordnet; dieses Merkmal beschränkt die Erfindung nicht, sondern es erlaubt lediglich eine übersichtlichere Darstellung.

Figur 3a zeigt ausschnittsweise den Grenzbereich zwischen zwei Radialsegmenten 2.1, 2.2 einer erfindungsgemäßen Vulkanisierform in einem Schnitt in Umfangsrichtung. Die Schnittebene verläuft - wie bei den vorangehenden und folgenden Schnitten 3b, 3c - durch den Zenit des zu vulkanisierenden Reifens. Die Segmente 2 weisen Stege 4 auf von über dem Umfang konstanten - also nicht im Segmentgrenzbereich verjüngten - Querschnitt. Fig. 3a zeigt die noch geöffnete Stellung (mit übertrieben groß dargestelltem Spalt 20). In die im wesentlichen planen Stirnflächen 6 sind Ausnehmungen 7 eingefräst.

Fig. 3b zeigt die gleichen Radialsegmente 2.1, 2.2 in geschlossener Stellung. In die Ausnehmungen 7 kann via der Öffnungen 8 Kautschuk eindringen und das entsprechende Luftvolumen durch Entlüftungslöcher 9 herausdrücken.

Fig. 3c zeigt im entsprechenden Bildausschnitt das darin erzeugte Vulkanisat 21, einen Fahrzeugluftreifen. Dessen Peripherie 12 wird mittels eines Schneidwerkzeuges 13 vom Austrieb 17 befreit. Mit einem Pfeil ist die Bewegungsrichtung des Messers 13 angedeutet.

Figur 4 zeigt mit Blickrichtung in Umfangsrichtung die linke Hälfte des gleichen Radialsegmentes in Ansicht. Die verwendete Schraffur soll nicht etwa auf Schnittflächen hinweisen, sondern die Flächen hervorheben, die nach dem Formschließen mit entsprechenden Flächen des benachbarten Segmentes in Berührung treten; zur Unterscheidung von Schnittflächendarstellungen ist ein von 45° abweichender Schraffurwinkel gewählt. Die nicht schraffierten Flächen liegen weiter hinten; es sind dies die Begrenzungsflächen der Ausnehmung 7, der Öffnungen 8, und der Entlüftungsbohrungen 9.

Öffnungen 8, mit denen die Ausnehmung 7 mit dem Forminnenraum verbunden ist, sind ausschließlich in den Bereichen 14 der Vulkanisierform angeordnet, die erhabene Profilbereiche abformen. Im bereich der Stege 4 wird keinerlei Öffnung vorgesehen, weil der in Reifennuten anfallende Austrieb beschwerlicher zu entfernen ist als der von erhabenen Profilbereichen.

Die Ausnehmung 7 erstreckt sich vorzugsweise - wie in Fig. 4 zu sehen - bis nahe an die axialen Ränder, ohne auch diese auszunehmen. Der an den axialen Ränder über der gesamten radialen Höhe stehen bleibende Rest 16 begrenzt die Ausnehmung 7 in axialer Richtung und unterbindet weitgehend Kautschukabfluß aus den Ausnehmungen 7 in axialer Richtung.

Nach radial außen hin stehen die Ausnehmungen 7 mit der Außenatmosphäre über je eine oder eine kleine Vielzahl von Entlüftungsbohrungen 9 in Verbindung, deren Querschnitt Aₑ wesentlich kleiner ist als der Querschnitt A der radial inneren Öffnungen 8. Das Verhältnis zwischen beiden Querschnittflächen sollte mindestens 5:1 betragen und vorzugsweise zwischen 10:1 und 50:1 liegen.

Während die enge Einschnürung des Kautschukflusses von der Erweiterung 7 zu den Entlüftungsbohrungen hin das Volumen des austreibbaren Kautschukes auf das Volumen der Ausnehmung 7 begrenzt und so zur Toleranzunempfindlichkeit führt, hält die weniger enge Einschnürung des Kautschukflusses vom Forminnenraum in die Öffnungen 8 lediglich die nach Abschluß der Vulkanisation zu durchschneidenden Flächen klein. Wo leistungsfähige Schneidmaschinen zur Verfügung stehen, kann eine Einschnürung in der Öffnung 8 völlig unterbleiben; dann kann die Vulkanisationszeit besonders kurz eingestellt werden kann, sei es durch höhere Beschleunigerdosierung, sei es durch höhere Vulkanisationstemperaturen.

Der Verzicht auf eine Einschnürung des Kautschukflusses zwischen dem Forminnenraum und der Erweiterung 7 beeinträchtigt die Leichtigkeit des abschließenden Wegschneidens des Austriebes besonders wenig, wenn die insgesamt dem Kautschukfluß zur Verfügung zu stellende Querschnittfläche auf mehrere Einzelquerschnitte aufgeteilt wird. Diese Überlegungen führten zu der in der nächsten Figur dargestellten Ausführungsform.

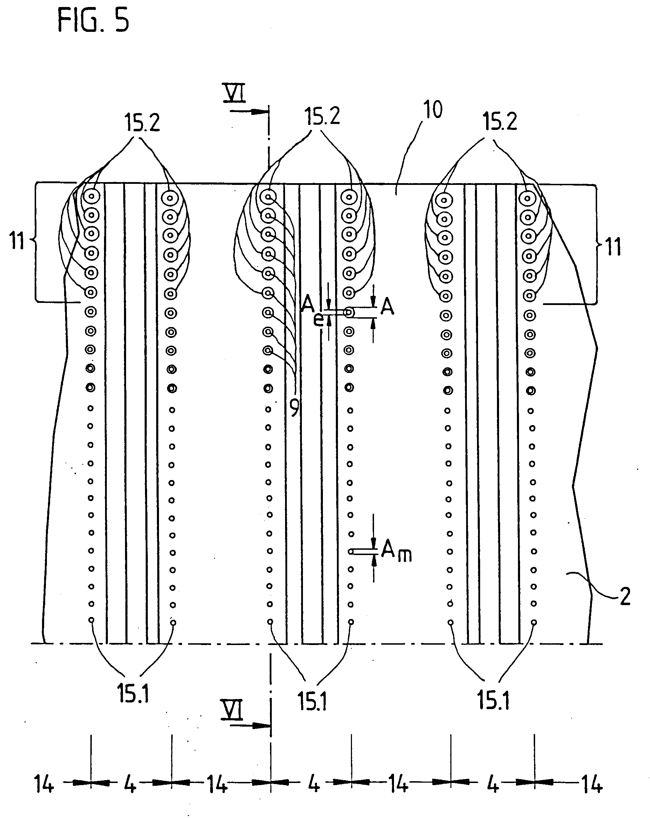

Figur 5 zeigt in Ansicht von radial innen nach radial außen die Hälfte eines Radialsegmentes 2 zur Abformung von Luftreifen mit drei Umfangsrillen. Das auszutreibende Kautschukvolumen wird hier von einer Vielzahl von Löchern 15.2 aufgenommen, die als zum Forminnenraum offene "Sackbohrungen" ausgebildet sind und hier sowohl als Öffnung wie als Erweiterung ohne zwischenliegende Einschnürung wirken. Der Begriff "Sackbohrung" gibt den optischen Eindruck insbesondere der im Segmentgrenzbereich 11 befindlichen Löcher 15.2 gut wieder, ist jedoch insofern nicht ganz korrekt, als diese "Sacklöcher" in kleine Entlüftungsbohrungen 9 münden, wodurch ein schmaler Durchgang von radial innen nach radial außen geschaffen ist. Dargestellt ist in dieser Figur die reihenförmige Anordnung solcher Sacklöcher 15.2 zu beiden Seiten eines jeden nutformenden Steges 4. Der Sacklochdurchmesser nimmt von der Segmentgrenze 10 zur Segmentmitte hin stetig ab. Außerhalb des Segmentgrenzbereiches, der hier 20 % der Segmentumfangslänge einnimmt, sind die radial inneren Enden der Löcher nicht mehr gegenüber dem radial äußeren Ende erweitert; Die mittig liegenden Löcher 15.1 wirken demnach nur als Entlüftungsbohrungen 9.

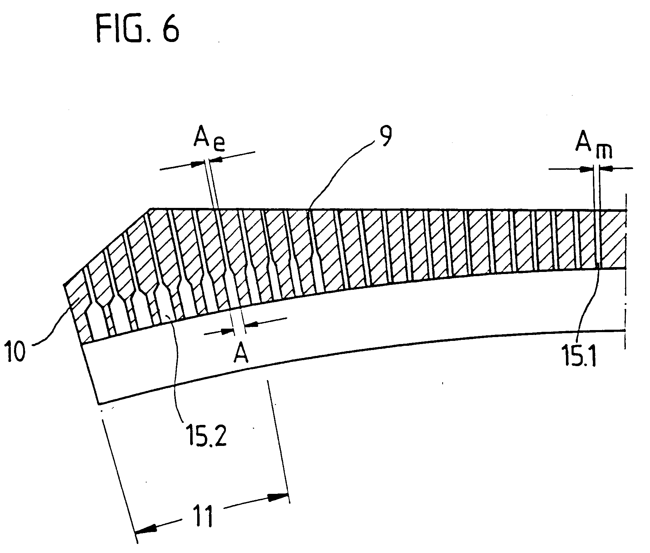

Figur 6 zeigt in einem Schnitt längs der Umfangsrichtung, gemäß dem in Figur 5 angegebenen Schnittverlauf das gleiche Ausführungsbeispiel. Wie hier dargestellt, ist die Querschnittfläche Aₑ der Entlüftungsbohrungen 9 vorzugsweise gleich groß wie die Querschnittfläche Aₘ der Bohrungen 15.1 in Segmentmitte.

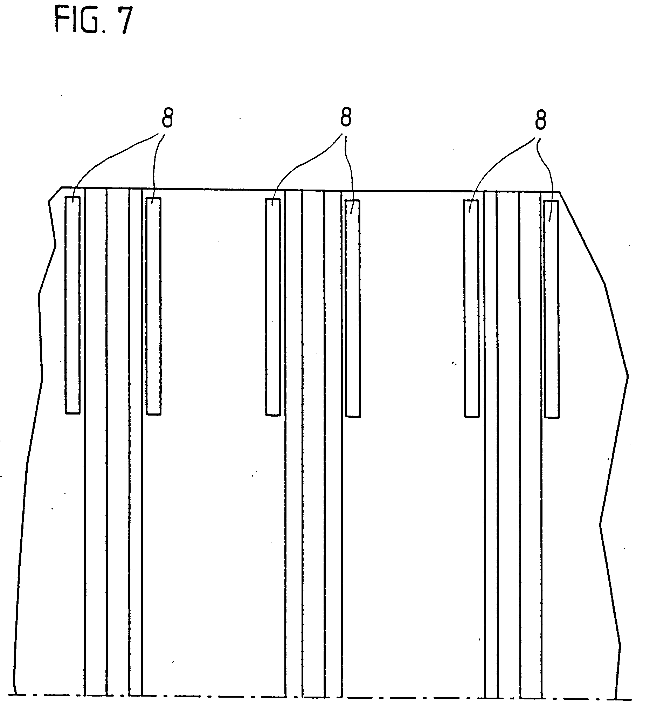

Figur 7 zeigt analog der Darstellungsweise von Figur 5 eine andere Variante, die man von der vorbeschriebenen Ausbildung dadurch ableiten könnte, daß die zwischen den einzelnen Sackbohrungen stehenden Stege entfernt werden. Wegen der wesentlich kleineren Anzahl von Details ist diese Formvariante billiger herzustellen und benötigt Pro Ausnehmung 7 lediglich eine einzige Entlüftungsbohrung 9.

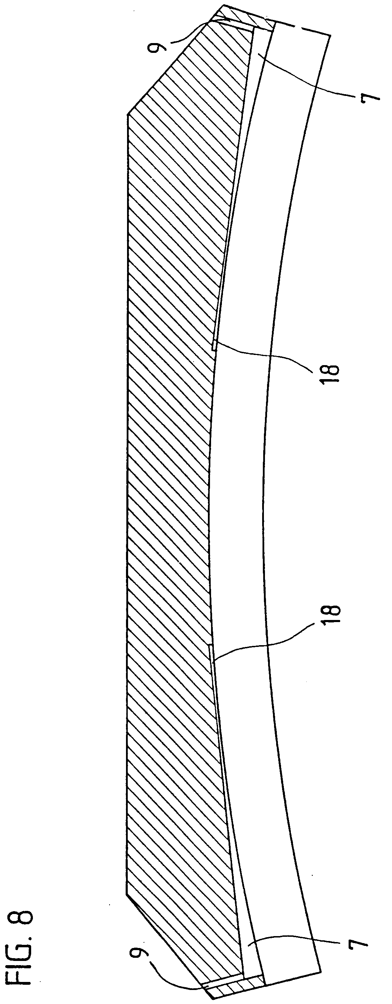

Figur 8 zeigt analog der Darstellungsweise der Figur 6 in einem Schnitt in Umfangsrichtung gemäß dem in Figur 7 angegebenen Schnittverlauf das gleiche Ausführungsbeispiel wie Figur 7. Die Ausnehmungen 7 verjüngen sich stetig mit zunehmender Entfernung von den Segmentgrenzen und laufen in Entlüftungsfortsätzen 18 aus. Obwohl außerhalb der Segmentgrenzbereiche weitere Entlüftungsbohrungen möglich sind, sind sie bei dieser Ausführung nicht erforderlich; vielmehr entweicht bei dieser Ausführung die zu verdrängende Luft über nur je zwei Entlüftungsbohrungen 9 pro Profilsteg (entsprechend Formnut), und zwar je eine bei jeder Segmentgrenze.

Die Erfindung ist nicht auf die dargestellten Ausführungsbeispiele beschränkt. Entscheidend ist vielmehr, daß dem zu den Segmentgrenzen hin gerichteten Kautschukfluß ein Ausweichraum außerhalb des gefertigten Reifens angeboten wird und der dahin entwichene Kautschuk nach der Vulkanisation vom Reifen entfernt wird.

Eine Liste der verwendeten Bezugszeichen ist Bestandteil der Beschreibung.

### Bezugszeichen:

- 1: Rohling
- 2: Radialsegment der Vulkanisationsform
- 3: Pfeile als Anzeiger der örtlichen Bewegungsrichtung
- 4: Stege in Vulkanisationsform zur Abformung von Reifennuten
- 5: radial innere Kante der Segmente 2
- 6: Stirnflächen der Stege 4
- 7: Ausnehmungen
- 8: Öffnungen der Ausnehmungen 7 nach radial innen hin
- 9: Entlüftungsbohrungen der Ausnehmungen 7 nach radial außen hin
- 10: Segmentgrenzen
- 11: Grenzbereich
- 12: Reifenperipherie
- 13: Messer
- 14: Bereiche der Segmente 2, die erhabene Reifenbereiche abformen / Gegenstück zu Reifennuten abformenden Stegen 4
- 15: Löcher
- 15.1: Löcher außerhalb Grenzbereich 11
- 15.2: Löcher innerhalb Grenzbereich 11
- 16: axiale Begrenzung der Ausnehmung 7
- 17: Austrieb
- 18: Entlüftungsfortsatz
- 19:
- 20: Spalt zwischen Segmenten 2
- 21: Vulkanisat

## Patentansprüche

1. Verfahren zur Herstellung eines Fahrzeugluftreifens mit radialer Karkasse und Gürtellagen, in einer radial geteilten Vulkanisationsform, welche radial bewegliche Segmente (2), nachfolgend Radialsegmente (2) genannt, aufweist, wobei das Verhältnis (V) zwischen der nach Einbringung des Reifenrohlings (1) in die Vulkanisationsform mittels eines inneren Formüberdruckes realisierbaren Resterhebung (e) und der Profiltiefe (t) kleiner 1 ist, so daß schon vor dem Vollenden des Formschließens die Radialsegmente (2) den Rohling (1) berühren, wodurch beim Schließen der Radialsegmente (2) der noch fließfähige Kautschuk teilweise zu den sich im wesentlichen axial erstreckenden Grenzen der Radialsegmente (2) hingedrückt wird, wo er überschüssig ist,
**dadurch gekennzeichnet,** daß die überschüssige Kautschukmenge während des Schließens der Form und/oder während der Resterhebung nach radial außen durch Öffnungen (8) oder Löcher (15) der Form ausgetrieben wird, der Fahrzeugluftreifen dann zusammen mit den noch im Bereich der Segmentgrenzen an ihm haftenden Austriebe (17) vulkanisiert wird und die Austriebe (17) nach Vollendung der Vulkanisation entfernt werden, sodaß das Endprodukt frei von Austrieben (17) ist.

2. Verfahren nach Anspruch 1 dadurch gekennzeichnet, daß die Radialsegmente (2) in der weitest möglich geschlossenen Stellung sich an ihrer radial inneren Peripherie zumindest nicht über der gesamten axialen Breite berühren, sodaß Öffnungen (8) an der radial inneren Peripherie verbleiben, welche die Segmentgrenzen (10) durchdringen, daß nach Aufbau des inneren Formüberdruckes Kautschuk durch diese Öffnungen (8) im wesentlichen nach radial außen ausgetrieben wird und, daß der Austrieb (17) nach Vollendung der Vulkanisation entfernt wird.

3. Verfahren nach Anspruch 2 dadurch gekennzeichnet, daß Segmentgrenzen (10) durchdringende Öffnungen (8) sich nur in den axialen Bereichen (14) befinden, wo erhabene Profilbereiche des zu fertigenden Reifens abgeformt werden und, daß der Austrieb (17) nach Vollendung der Vulkanisation durch ein entlang der Reifenperipherie geführtes Trennmittel wie ein Messer (13) oder dergleichen entfernt wird.

4. Verfahren nach Anspruch 1, dadurch gekennzeichnet, daß die Radialsegmente (2) zumindest in den die erhabenen Bereiche der Lauffläche abformenden Bereichen (14) in an sich bekannter Weise Löcher (15) aufweisen, in denen sich Austrieb (17) bildet, der nach Vollendung der Vulkanisation vom Reifen entfernt wird, und dadurch, daß die Radialsegmente (2) zumindest in jedem Grenzbereich (11), von denen ein jeder eine Bogenlänge von mindestens 10 % der jeweiligen Radialsegment-Bogemlänge (s) beträgt, solche Löcher (15.2) aufweisen, deren Querschnittfläche (A) mindestens doppelt so groß ist wie die Querschnittfläche (Aₘ) der Löcher (15.1) in der Mitte (bezüglich der Umfangserstreckung) der Radialsegmente (2), wobei in an sich bekannter Weise die Querschnittfläche (Aₘ) der Löcher (15.1) in der Mitte (bezüglich der Umfangsrichtung) der Radialsegmente (2) 0,7 bis 3,5 mm² beträgt.

5. Verfahren nach Anspruch 4 dadurch gekennzeichnet, daß sich die Lochquerschnittflächen von der Segmentmitte zu den Segmentgrenzen (10) hin verstetigt, vorzugsweise gemäß einer Parabel, vergrößern.

6. Verfahren nach Anspruch 1 dadurch gekennzeichnet, daß die Radialsegmente (2) nur in jedem Grenzbereich (11), von denen ein jeder eine Bogenlänge von mindestens 10 % und höchstens 20 % der jeweiligen Radialsegment-Bogenlänge (s) beträgt, Löcher (15.2) aufweisen, deren Querschnittflächen (A) zwischen 1,4 und 8 mm² liegen, daß nach Aufbau des inneren Formüberdruckes Kautschuk durch diese Löcher (15.2) im wesentlichen nach radial außen ausgetrieben wird und, daß der Austrieb (17) nach Vollendung der Vulkanisation entfernt wird.

7. Verfahren nach Anspruch 2 dadurch gekennzeichnet, daß die Radialsegmente (2) zumindest in den die erhabenen Bereiche der Lauffläche abformenden Bereichen (14) Löcher (15) aufweisen, in denen sich Austrieb (17) bildet, wobei die Löcher (15.1) in Segmentmitte eine Querschnittfläche zwischen 0,7 und 3,5 mm und in den Segmentgrenzbereichen (11), von denen ein jeder sich über eine Bogenlänge von mindestens 10 % der jeweiligen Radialsegment-Bogenlänge (s) erstreckt, eine mindestens 1,5mal so große Querschnittfläche haben.

8. Verfahren nach Anspruch 4 oder 7 dadurch gekennzeichnet, daß eine Vulkanisationsform verwendet wird, deren Radialsegmente (2) in gleichmäßiger Dichte mit Löchern (15) durchbrochen sind, wobei die Lochquerschnitte in den gemäß Anspruch 5 definierten Grenzbereichen (11) mindestens doppelt so groß sind wie in Segmentmitte.

9. Verfahren nach Anspruch 2 dadurch gekennzeichnet, daß die Radialsegmente (2) zumindest in den die erhabenen Bereiche der Lauffläche abformenden Bereichen (14) Löcher (15.2) aufweisen, in denen sich Austrieb (17) bildet, wobei in Segmentmitte (bezüglich der Umfangsrichtung) keine Löcher angeordnet sind sondern nur in den gemäß Anspruch 5 definierten Segmentgrenzbereichen, wobei die Lochquerschnittfläche zwischen 1 und 6 mm² liegt.

10. Verfahren nach Anspruch 1 dadurch gekennzeichnet, daß sich in Kautschukfließrichtung gesehen hinter den Öffnungen (8) bzw. Löchern (15.2) in Grenzbereichen (11) jeweils zunächst eine Erweiterung (7) und daran anschließend eine der Entlüftung dienende Verengung (9) befindet, deren Querschnittfläche (Aₑ) höchstens ein Fünftel der Querschnittfläche (A) der davor befindlichen Öffnung (8) bzw. des Loches (15.2) beträgt.

11. Verfahren nach Anspruch 1 dadurch gekennzeichnet, daß es zur Herstellung eines Nutzfahrzeugreifen für nichtangetriebene Achsen verwendet wird.

12. Verfahren nach Anspruch 1 dadurch gekennzeichnet, daß es zur Herstellung eines Nutzfahrzeugreifen für Vorderachsen verwendet wird.

13. Radial geteilte Vulkanisationsform, geeignet zur Durchführung eines Verfahrens gemäß Anspruch 2, die radial bewegliche Segmente (2), nachfolgend Radialsegmente (2) genannt, aufweist, wobei - in der weitest möglich geschlossenen Stellung -
benachbarte Radialsegmente (2) an den Stellen, wo sie Nuten des zu fertigenden Reifens abformen, sich berühren, hingegen benachbarte Radialsegmente (2) an jeweils mindestens einer Stelle (14) pro Segmentgrenze (10), wo sie (2) erhabene Laufflächenbereiche des zu fertigenden Reifens abformen, sich nicht berühren und hierdurch eine Öffnung (8) ausbilden.

14. Vorrichtung nach vorangehendem Anspruch dadurch gekennzeichnet, daß sich benachbarte Radialsegmente (2) an allen Stellen (14), wo sie erhabene Laufflächenbereiche des zu fertigenden Reifens abformen, in der weitest möglich geschlossenen Stellung nicht berühren.

15. Radial geteilte Vulkanisationsform, geeignet zur Durchführung eines Verfahrens gemäß Anspruch 4, die Radialsegmente (2) aufweist, die (2) zumindest in den die erhabenen Bereiche der Lauffläche abformenden Bereichen (14) Löcher (15) aufweisen und zwar zumindest in jedem Grenzbereich (11), von denen ein jeder eine Bogenlänge von mindestens 10 % der jeweiligen Radialsegment-Bogenlänge (s) beträgt, Löcher (15.2) deren Querschnittfläche (A) mindestens doppelt, vorzugsweise mehr als 5-mal so groß ist wie die Querschnittfläche (Aₘ) der Löcher (15.1) in der Mitte - bezüglich der Umfangserstreckung - der Radialsegmente (2), wobei die Querschnittsfläche (Aₘ) der Löcher (15.1) in der Mitte - ebenfalls bezüglich der Umfangserstreckung - der Radialsegmente 0,7 bis 3,5 mm² beträgt.

16. Radial geteilte Vulkanisationsform, geeignet zur Durchführung eines Verfahrens gemäß Anspruch 6, die Radialsegmente (2) aufweist, die (2) zumindest in den die erhabenen Laufflächenbereiche abformenden Bereichen (14) Löcher (15) aufweisen, wobei die Radialsegmente (2) nur in jedem Grenzbereich (11), von denen jeder eine Bogenlänge von mindestens 10 % und höchstens 20 % der jeweiligen Radialsegment-Bogenlänge (s) beträgt, Löcher (15.2) aufweisen, deren Querschnittflächen (A) zwischen 1,4 und 8 mm² liegen.

17. Vorrichtung nach Anspruch 13 oder 15 zur Herstellung eines Fahrzeugluftreifens gemäß Anspruch 7, dadurch gekennzeichnet, daß die Radialsegmente (2) in gleichmäßiger Dichte mit Löchern (15) durchbrochen sind, wobei die Lochquerschnitte in den gemäß Anspruch 15 definierten Grenzbereichen (11) mindestens doppelt so groß sind wie in Segmentmitte.

18. Vorrichtung nach einem der vorangehenden Ansprüche 13 bis 17 zur Herstellung eines Fahrzeugluftreifens gemäß Anspruch 10 dadurch gekennzeichnet, daß sich radial hinter den Öffnungen (8) bzw. Löchern (15.2) jeweils zunächst eine kavernenartige Erweiterung (7) und dann eine den Kautschukfluß drosselnde aber die Entlüftung kaum behindernde Verengung (9) anschließt.

## Claims

1. Method of manufacturing a pneumatic vehicle tyre with a radial carcase and ply layers in a radially-divided vulcanising mould which has radially movable segments (2), hereinafter termed radial segments (2), the ratio (V) between the residual elevated portion (e) which may be produced after introduction of the tyre blank (1) into the vulcanising mould by means of an internal mould overpressure, and the profile depth (t), being less than 1, so that the radial segments (2) contact the blank (1) before mould closure is complete, so that upon closure of the radial segments (2) the rubber, which is still free-flowing, is compressed partly towards the substantially axially-extending borders of the radial segments (2), where it is superfluous,
characterised in that
the superfluous quantity of rubber is expressed, during closure of the mould and/or during the residual elevation, radially outwards through openings (8) or holes (15) in the mould, the pneumatic vehicle tyre then being vulcanised, together with the expressed portions (17) still adhering thereto in the region of the segment borders, and the expressed portions (17) are removed after vulcanisation is completed, so that the end product is free of expressed portions (17).

2. Method according to claim 1, characterised in that the radial segments (2), in the furthest possible closed position, at their radial inner periphery do not come into contact with one another, at least over the entire axial width, so that there remain on the radial inner periphery openings (8) which pass through the segment borders (10), in that, after build-up of the internal mould overpressure, rubber is expressed through these openings (8) in a substantially radial outward direction, and in that the expressed portion (17) is removed after vulcanisation is complete.

3. Method according to claim 4, characterised in that openings (8) passing through segment borders (10) are located only in the axial areas where raised profile regions of the tyre to be manufactured are moulded, and in that the expressed portion (17) is removed after vulcanisation is complete by a separating means passed along the tyre periphery, such as a knife (13) or the like.

4. Method according to claim 1, characterised in that the radial segments (2), at least in the areas (14) moulding the raised regions of the tyre tread, have in a known way holes (15) in which expressed material (17) forms, which is removed from the tyre after vulcanisation is completed, and by virtue of the fact that the radial segments (2), at least in each border region (11), each of which has a curve length of at least 10% of the respective radial segment curve length (s), has holes (15.2) such that their cross-sectional area (A) is at least twice as great as the cross-sectional area
(Aₘ) of the holes (15.1) in the middle (with respect to the circumferential extension) of the radial segments (2), the cross-sectional area (Aₘ) of the holes (15.1) in the middle (with respect to the circumferential direction) of the radial segments (2) being in a known way 0.7 to 3.5 mm².

5. Method according to claim 4, characterised in that the cross-sectional areas of the holes increase in size continuously from the centre of the segments towards the borders (10) of the segments, preferably in a parabolic manner.

6. Method according to claim 1, characterised in that the radial segments (2) have holes (15.2) only in each border region (11), each of which has a curve length of a minimum 10% and maximum 20% of the respective radial segment curve length (s), the cross-sectional areas (A) of said holes (15.2) lying between 1.4 and 8 mm², in that, after build-up of the internal overpressure, rubber is expressed through these holes (15.2) in a substantially radial outward direction, and in that the expressed material (17) is removed after vulcanisation is complete.

7. Method according to claim 2, characterised in that the radial segments (2), at least in the areas (14) moulding the raised regions of the tyre tread, have in a known way holes (15) in which expressed material (17) forms, the holes (15.1) having in the centre of the segment a cross-sectional area of between 0.7 and 3.5 mm, and in the segment border areas (11), each of which extends over a curve length of at least 10% of the respective radial segment curve length (s), have a cross-sectional area at least 1.5 times as great.

8. Method according to claim 4 or 7, characterised in that a vulcanising mould is used, the radial segments (2) of which are penetrated at a uniform density by holes (15), the cross-sections of the holes in the border areas (11) defined in accordance with claim 5 being at least twice as great as in the centre of the segments.

9. Method according to claim 2, characterised in that the radial segments (2), at least in the areas (14) moulding the raised regions of the tyre tread, have holes (15.2) in which expressed material (17) forms, no holes being formed in the centre of the segments (with respect to the circumferential direction), or only in the segment border areas defined in accordance with claim 5, the cross-sectional area of the holes lying between 1 and 6 mm².

10. Method according to claim 1, characterised in that, seen in the flow direction of the rubber, there are located behind the openings (8) or holes (15.2) in border regions (11) respectively firstly an expanded portion (7) and following this a constriction (9) serving for air evacuation, the cross-sectional area (Aₑ) of these being one-fifth of the cross-sectional area (A) of the opening (8) or hole (15.2) located therebefore.

11. Method according to claim 1, characterised in that it is used to manufacture a utility vehicle tyre for non-driven axles.

12. Method according to claim 1, characterised in that it is used to manufacture a utility vehicle tyre for front axles.

13. Radially divided vulcanising mould suitable for carrying out a method according to claim 2, and which has radially movable segments (2), hereinafter termed radial segments (2), in the furthest possible open position,
adjacent radial segments (2) contacting each other at the points where they mould grooves in the tyre to be manufactured, whereas adjacent radial segments (2), respectively at at least one point (14) per segment border (10), where they (2) mould raised tyre tread areas of the tyre to be manufactured, do not contact each other, thus forming an opening (8).

14. Device according to the preceding claim, characterised in that adjacent radial segments (2), at all points (14) where they mould raised tyre tread areas of the tyre to be manufactured, do not contact each other in the furthest possible closed position.

15. Radially divided vulcanising mould suitable for carrying out a method according to claim 4, which has radial segments (2) which (2), at least in the regions (14) moulding the raised areas of the tyre tread, have holes (15), i.e. at least in each border region (11) of which each has a curve length of at least 10% of the respective radial segment curve length (s), have holes (15.2) whose cross-sectional area (A) is at least twice, preferably more than 5 times greater than the cross-sectional area (Aₘ) of the holes (15.1) in the centre, with respect to the circumferential direction, of the radial segments (2), the cross-sectional area (Aₘ) of the holes (15.1) in the centre - likewise with respect to the circumferential direction - of the radial segments being 0.7 to 3.5 mm².

16. Radially divided vulcanising mould suitable for carrying out a method according to claim 6, which has radial segments (2) which (2), at least in the regions (14) moulding the raised areas of the tyre tread, have holes (15), the radial segments (2) having, only in each border region (11), each of which has a curve length of a minimum 10% and maximum 20% of the respective radial segment curve length (s), holes (15.2) whose cross-sectional areas (A) lie between 1.4 and 8 mm².

17. Device according to claim 13 or 15 for manufacturing a pneumatic vehicle tyre according to claim 7, characterised in that the radial segments (2) are penetrated at a uniform density by holes (15), the cross-sections of the holes in the border areas (11) defined in accordance with claim 15 being at least twice as great as in the centre of the segments.

18. Device according to one of the preceding claims 13 to 17 for manufacturing a pneumatic vehicle tyre according to claim 10, characterised in that there are located radially behind the openings (8) or holes (15.2) respectively firstly at least one cavern-like expanded portion (7) and then a constriction (9), which shuts-off the flow of rubber but scarcely hinders the air evacuation.

## Revendications

1. Procédé pour la fabrication des bandages pneumatiques des automobiles comprenant une carcasse radiale et une nappe d'armature, dans un moule de vulcanisation séparé dans le sens radial, qui est muni de segments (2) mobiles dans le sens radial, ci-après dénommés segments radiaux (2), le rapport (V) entre l'élévation des résidus (e), obtenu par l'intermédiaire d'une surpression à l'intérieur du moule après l'introduction de l'ébauche de pneumatique (1) dans le moule de vulcanisation, et la profondeur de la bande de roulement (t) est inférieur à 1, de telle sorte que déjà avant la fermeture totale du moule, les segments radiaux (2) entrent en contact avec l'ébauche (1), ce qui, lors de la fermeture des segments radiaux (2), pousse le caoutchouc encore fluide partiellement vers les bords des segments radiaux (2) qui s'étendent sensiblement dans le sens axial, où il est excédentaire
caractérisé en ce que les quantités excédentaires de caoutchouc, pendant la fermeture du moule et/ou pendant l'élévation des résidus, sont expulsées dans le sens radial en allant vers l'extérieur par des ouvertures (8) ou des trous (15) du moule, ensuite le bandage pneumatique est vulcanisé avec les bavures (17) qui adhèrent encore au bandage pneumatique dans la zone des bords des segments et les bavures (17) sont éliminées à la fin du processus de vulcanisation, de telle sorte que le produit fini ne présente aucune bavure (17).

2. Procédé selon la revendication 1, caractérisé en ce que les segments radiaux (2), dans la position la plus fermée possible, entrent en contact les uns avec les autres dans la périphérie intérieure radiale et non pas sur toute la largeur axiale, de telle sorte que des ouvertures (8) soient maintenues sur la périphérie intérieure radiale, qui traversent les bords des segments (10), que, après l'application d'une surpression à l'intérieur du moule, du caoutchouc est expulsé sensiblement vers l'extérieur dans le sens radial par ces ouvertures (8) et que les bavures (17) sont éliminées à la fin du processus de vulcanisation.

3. Procédé selon la revendication 2, caractérisé en ce que les ouvertures (8) qui traversent les bords des segments (10) ne sont réalisées que dans les zones axiales (14), destinées à sculpter les zones en relief de la bande de roulement du pneumatique à fabriquer, et que les bavures (17) sont éliminées à la fin du processus de vulcanisation par un outil de coupe, comme un couteau (13) ou un outil analogue, guidé le long de la périphérie du pneumatique.

4. Procédé selon la revendication 1, caractérisé en ce que les segments radiaux (2), au moins dans les zones (14) destinés à sculpter les zones en relief de la bande de roulement, présentent des trous (15) de manière connue, dans lesquelles se forment des bavures (17), qui seront éliminées à la fin du processus de vulcanisation, et en ce que les segments radiaux (2), au moins dans chaque zone de séparation (11), dont la longueur d'arc de chacune est au moins égale à 10 % de la longueur d'arc de chaque segment radial (s), sont munis de trous (15.2) dont la section (A) est au moins égale au double de la section (Aₘ) des trous (15.1) réalisés dans le milieu (par rapport au sens de la périphérie) des segments radiaux (2), d'une manière connue, la section (Aₘ) des trous (15.1) dans le milieu (par rapport au sens de la périphérie) des segments radiaux (2) étant comprise entre 0,7 et 3,5 mm².

5. Procédé selon la revendication 4, caractérisé en ce que les sections des trous progressent en allant du milieu du segment vers les bords du segment (10), s'agrandissent de préférence conformément à une parabole.

6. Procédé selon la revendication 1, caractérisé en ce que les segments radiaux (2), uniquement dans chaque zone de séparation (11), dont la longueur d'arc de chacune est égale à 10 % au minimum et 20 % au maximum de la longueur d'arc de chaque segment radial (s) sont munis de trous (15.2), dont les sections (A) sont comprises entre 1,4 et 8 mm², que, après l'application d'une surpression à l'intérieur du moule, du caoutchouc est expulsé sensiblement dans le sens radial vers l'extérieur par ces trous (15.2) et que les bavures (17) seront éliminées à la fin du processus de vulcanisation.

7. Procédé selon la revendication 2, caractérisé en ce que les segments radiaux (2), au moins dans les zones (14) destinées à sculpter les zones en relief de la bande de roulement, présentent des trous (15), dans lesquels se forment des bavures (17), les trous (15.1) dans le milieu du segment ayant une section comprise entre 0,7 et 3,5 mm² et ayant une section au moins 1,5 fois plus grande dans les zones de séparation (11), dont la longueur d'arc de chacune est au moins égale à 10 % de la longueur d'arc de chaque segment radial (s).

8. Procédé selon la revendication 4 ou 7, caractérisé en ce qu'on utilise un moule de vulcanisation dont les segments radiaux (2) sont percés de trous (15) répartis uniformément, les sections des trous dans les zones de séparation (11) définies selon la revendication 5 sont au moins deux fois plus grands que ceux du milieu du segment.

9. Procédé selon la revendication 2, caractérisé en ce que les segments radiaux (2), au moins dans les zones (14) destinées à sculpter les zones en relief de la bande de roulement, sont munis de trous (15.2), dans lesquels se forment des bavures (17), aucun trou n'étant réalisé dans le milieu du segment (par rapport au sens de la périphérie), mais seulement dans les zones de séparation définies conformément à la revendication 5, les sections des trous étant comprises entre 1 et 6 mm².

10. Procédé selon la revendication 1, caractérisé en ce que, dans le sens de l'écoulement du caoutchouc, derrière les ouvertures (8) et/ou les trous (15.2) dans les zones de séparation (11), est réalisé chaque fois d'abord un évasement (7), suivi d'un rétrécissement (9) servant de purge d'air, dont la section (Aₑ) est au maximum égale au cinquième de la section (A) de l'ouverture (8) et/ou du trou (15.2) précédent.

11. Procédé selon la revendication 1, caractérisé en ce qu'il est utilisé pour la fabrication des pneumatiques pour véhicules utilitaires pour des roues non motrices.

12. Procédé selon la revendication 1, caractérisé en ce qu'il est utilisé pour la fabrication des pneumatiques pour véhicules utilitaires pour les roues motrices des axes avant.

13. Moule de vulcanisation séparé dans le sens radial, approprié à la mise en oeuvre d'un procédé conforme à la revendication 2, qui présente des segments (2) mobiles dans le sens radial, ci-après dénommés segments radiaux (2), les segments radiaux (2) voisins - dans la position la plus fermée possible - entrant en contact les uns avec les autres dans les zones destinées à sculpter les cannelures du pneumatique à fabriquer, par contre les segments radiaux (2) voisins ne se touchant pas au moins dans une zone (14) par bord de segment (10), dans laquelle les segments radiaux (2) sculptent les zones en relief de la bande de roulement du pneumatique à fabriquer, ce qui forme une ouverture (8).

14. Dispositif selon la revendication précédente, caractérisé en ce que les segments radiaux (2) voisins ne se touchent pas, dans la position la plus fermée possible, dans les zones (14) où ils sculptent les zones en relief de la bande de roulement du pneumatique à fabriquer.

15. Moule de vulcanisation séparé dans le sens radial, approprié à la mise en oeuvre d'un procédé conforme à la revendication 4, qui présente des segments radiaux (2), lesquels (2) sont munis de trous (15) au moins dans les zones (14) destinées à sculpter les zones en relief de la bande de roulement et, au moins dans chaque zone de séparation (11), dont la longueur d'arc de chacune est au moins égale à 10 % de la longueur d'arc de chaque segment radial (s), sont munis de trous (15.2) dont la section (A) est au moins égale à deux fois, de préférence cinq fois, la section (Aₘ) des trous (15.1) réalisés dans le milieu (par rapport au sens de la périphérie) des segments radiaux (2), la section (Aₘ) des trous (15.1) dans le milieu (par rapport au sens de la périphérie) des segments radiaux (2) étant comprise entre 0,7 et 3,5 mm².

16. Moule de vulcanisation séparé dans le sens radial, approprié à la mise en oeuvre d'un procédé conforme à la revendication 6, qui présente des segments radiaux (2), lesquels (2) sont munis de trous (15) au moins dans les zones (14) destinées à sculpter les zones en relief de la bande de roulement, les segments radiaux (2) n'étant munis que dans chaque zone de séparation (11), dont la longueur d'arc de chacune est égale à 10 % au minimum et 20 % au maximum de la longueur d'arc de chaque segment radial (s), de trous (15.2) dont la section (A) est comprise entre 1,4 et 8 mm².

17. Dispositif selon la revendication 13 ou 15 destiné à la fabrication d'un bandage pneumatique pour véhicule conforme à la revendication 7, caractérisé en ce que les segments radiaux (2) sont munis de trous (15) répartis uniformément, la section des trous dans les zones de séparation (11), définies conformément à la revendication 15, étant égale au moins au double de la section de ceux réalisés dans le milieu du segment.

18. Dispositif selon l'une quelconque des revendications 13 à 17 destiné à la fabrication d'un bandage pneumatique pour véhicule conforme à la revendication 10, caractérisé en ce que, radialement derrière les ouvertures (8) et/ou les trous (15.2) sont disposés chaque fois, d'abord, un évasement (7) en forme de caverne, et ensuite un rétrécissement (9) ralentissant l'écoulement du caoutchouc, mais ne gênant pratiquement pas l'évacuation de l'air.
